# FASCICULE DE BREVET EUROPEEN

(11) **EP 1 230 031 B1**
(45) Date de publication et mention de la délivrance du brevet: **17.03.2004**
(21) Numéro de dépôt: 00977635.2
(22) Date de dépôt: 08.11.2000
(51) Int. Cl.: B05B 11/00, F16K 15/02

(54) **POMPE A CADENCE RAPIDE**
PUMPE MIT SCHNELLER HIN- UND HERBEWEGUNG
FAST RATE PUMP

(30) Priorité: 12.11.1999 FR 9914234
(43) Date de publication de la demande: 14.08.2002
(73) Titulaire: VALOIS S.A.S., 27110 Le Neubourg (FR)
(72) Inventeur: GARCIA, Firmin, F-27000 Evreux (FR); ABERGEL, Aline, F-92100 Boulogne (FR)
(74) Mandataire: CAPRI
(86) Numéro de dépôt international: PCT/FR2000/003110
(87) Numéro de publication internationale: WO 2001/034307

(56) Documents cités:
- DE-A- 2 559 524
- DE-A- 2 644 321
- GB-A- 1 530 582
- US-A- 4 273 290
- US-A- 4 364 520
- US-A- 4 989 790
- US-A- 5 716 007

## Description

La présente invention concerne un dispositif de distribution de produit fluide destiné à être monté sur un récipient contenant le produit fluide à distribuer. L'invention concerne plus particulièrement un distributeur comprenant une pompe à produit fluide définissant une chambre de pompe de volume variable, un clapet d'entrée pour permettre au produit fluide de rentrer dans la chambre de pompe, un clapet de sortie permettant au produit fluide sous pression de sortir de la chambre et un orifice de distribution situé en aval du clapet de sortie. Il s'agit là d'une conception tout à fait classique pour un distributeur qui peut par exemple être utilisé dans le domaine de la parfumerie, de la cosmétique ou de la pharmacie.

La présente invention s'oriente plus spécialement vers le clapet de sortie du distributeur. Un tel clapet de sortie comprend de manière classique un siège de clapet, un organe de clapet mobile destiné à venir en appui étanche sur le siège de clapet. L'organe de clapet mobile se décolle de son siège lorsque la pression à l'intérieur de la chambre dépasse un certain seuil. Le produit sous pression à l'intérieur de la chambre peut alors être refoulé à travers le clapet jusqu'à l'orifice de distribution. Le seuil de pression pour ouvrir le clapet de sortie est en général déterminé par des moyens de sollicitation qui appuient l'organe de clapet mobile sur son siège. Ces moyens de sollicitation peuvent par exemple se présenter sous la forme d'un ressort, qui peut être un ressort métallique cylindrique ou spirale, ou encore un ressort plastique sous n'importe quelle forme.

Un dispositif de distribution de ce type est divulgué par le document US-5,716,007 et correspond au préambule de la revendication 1.

L'organe de clapet mobile est en général un organe passif, en ce sens qu'il ne participe pas directement à refouler le produit vers l'orifice de distribution. Au contraire, l'organe de clapet mobile ne sert que de bouchon pour obturer la chambre de pompe lorsque la pression à l'intérieur de la chambre est inférieure au seuil prédéterminé de pression. Dès que la pression dépasse ce seuil, l'organe de clapet mobile se dégage de son siège et le produit peut s'écouler entre le siège et l'organe de clapet mobile jusqu'à l'orifice de distribution. Le produit fluide refoulé s'écoule donc de part et d'autre ou tout autour de l'organe de clapet mobile. On peut ainsi dire que l'organe de clapet mobile est totalement passif lors de la distribution du produit fluide. Et dès que la distribution est terminée, l'organe de clapet mobile regagne sa position étanche sur son siège.

La présente invention a pour but de définir un distributeur dont le clapet de sortie comprend un organe de clapet mobile qui participe activement à la distribution du produit fluide à travers l'orifice de distribution. En d'autres termes, l'organe de clapet mobile agira directement sur le produit fluide pour améliorer la distribution.

Pour atteindre ce but, la présente invention propose un distributeur dont le clapet de sortie comprend un siège de clapet et un organe de clapet mobile sollicité élastiquement sur ledit siège, l'organe de clapet mobile formant des moyens de piston pour refouler le produit fluide situé en aval vers l'orifice de distribution. L'organe de clapet mobile ne se décolle donc plus simplement de son siège pour laisser passer le produit fluide, mais refoule activement le produit fluide situé en aval de lui vers l'orifice de distribution. Ainsi, le produit distribué n'est pas le produit refoulé hors de la chambre de pompe mais celui situé dans la chambre de clapet en aval de l'organe de clapet mobile, qui, lors de son déplacement, pousse le produit fluide à travers l'orifice de distribution. Dans le distributeur proposé l'organe de clapet mobile est logé dans une chambre de clapet dans laquelle il se déplace avec un écart réduit. Le dispositif de distribution comprend aussi des moyens d'actionnement à cadence rapide, adaptés à faire varier rapidement et répétitivement le volume de la chambre de pompe de manière à créer, à la sortie de l'orifice de distribution, un jet de produit fluide sensiblement continu.

De préférence, la chambre de clapet définit une paroi interne cylindrique et l'organe de clapet mobile comprend un disque cylindrique présentant un diamètre légèrement inférieur à celui de la chambre de clapet de sorte que le bord périphérique du disque se déplace avec un écart très réduit par rapport à la paroi cylindrique.

Selon une autre forme de réalisation, la chambre de clapet définit une paroi interne cylindrique pourvue de nervures et l'organe de clapet mobile comprend un disque cylindrique présentant un bord périphérique en contact de glissement avec les nervures. Les nervures définissent entre elles des passages à travers lesquelles le produit fluide peut s'écouler pour contourner le disque. Cependant, tout comme dans la forme de réalisation précédente où le disque présente un écart très réduit avec la paroi de la chambre, il est créé une perte de charge très importante au niveau de la périphérie du disque de sorte que le produit fluide refoulé hors de la chambre de pompe aura tendance à déplacer le disque plutôt que de s'écouler autour de lui à travers l'écart réduit ou les passages définies par les nervures. Le produit refoulé hors de la chambre de pompe ne passe pas directement de l'autre côté de l'organe de clapet mobile en raison du passage de section réduite qu'il rencontre au niveau des bords de l'organe de clapet mobile. Ainsi, le produit fluide vient pousser l'organe de clapet mobile qui, lui, pousse le produit fluide vers l'orifice de distribution. Par conséquent, le déplacement du disque est très rapide en réponse à une arrivée de produit fluide sous pression étant donné que très peu de produit peut s'échapper autour du disque. D n'y a donc pas outre peu d'effet d'amortissement dans le déplacement du disque causé par la fuite du produit fluide autour du disque. De cette manière, le disque, et plus généralement l'organe de clapet mobile, remplit une fonction de piston hydraulique en refoulant le produit fluide situé en aval juste devant l'orifice de distribution. Ceci est le cas, bien que le disque n'est pas en contact étanche dans la chambre.

Selon une autre forme de réalisation, l'organe de clapet mobile est en contact de glissement étanche dans la chambre hormis au niveau de saignées permettant un passage du produit fluide vers l'orifice de distribution en fin de course de l'organe de clapet mobile en éloignement de son siège. Avantageusement, l'organe de clapet mobile est en contact de glissement dans un manchon situé dans la chambre. Dans ce cas, le manchon définit les saignées. L'organe de clapet mobile est en contact de glissement étanche avec la paroi de manchon ou de la chambre de clapet sur la majeure partie de sa course. En fin de course, une ou plusieurs saignées permettent au produit fluide refoulé hors de la chambre de pompe de passer de l'autre côté de l'organe de clapet mobile. Le disque remplit dans ce cas une véritable fonction de position jusqu'à son déplacement au niveau des saignées. Au-delà, le produit fluide qui a poussé le disque peut s'échapper dans la chambre de clapet autour du disque à travers les saignées.

L'utilisation d'un clapet de sortie tel que défini ci-dessus en combinaison avec des moyens d'actionnement à cadence rapide est très avantageux, étant donné que chaque actionnement de la chambre de pompe se présente sous la forme d'une impulsion brutale qui a pour effet de faire réagir très rapidement l'organe de clapet mobile. De plus, ces impulsions brusques créées par les moyens d'actionnement à cadence rapide minimisent la quantité de produit fluide qui s'écoule autour de l'organe de clapet mobile. Ce n'est que lorsque l'impulsion sera retombée que l'organe de clapet mobile regagnera sa position étanche sur son siège ce qui aura pour effet de faire passer le produit fluide initialement situé juste derrière lui autour de lui pour venir en aval, c'est à dire entre lui et l'orifice de distribution.

Selon une autre caractéristique de l'invention, la chambre de pompe comprend une paroi sous la forme d'une membrane souple déformable sur laquelle agissent les moyens d'actionnement.

Selon une autre caractéristique, la chambre de pompe, les clapets d'entrée et de sortie, et l'orifice de distribution font partie d'un premier sous-ensemble comportant des moyens de fixation sur un récipient. D'autre part, les moyens d'actionnement font partie d'un second sous-ensemble monté de manière amovible sur le premier sous-ensemble. Avantageusement, l'orifice de distribution est fixe par rapport à un réservoir sur lequel la pompe est montée. Selon une autre forme de réalisation, le premier sous-ensemble comprend un corps et une pièce reliée audit corps pour former ensemble ladite chambre de pompe, la pièce formant la membrane. De préférence, ladite pièce reçoit le clapet de sortie et l'orifice de distribution.

En utilisant une membrane souple déformable à la place d'un piston coulissant, on élimine totalement les forces de frottement au niveau de la chambre de pompe. La force nécessaire à la déformation de la membrane peut être déterminée à un niveau très bas en jouant par exemple sur l'épaisseur de la membrane. Plus la membrane est facilement déformable, moins les moyens d'actionnement ont besoin d'être puissants. On peut ainsi réaliser un dispositif de distribution ayant un volume très réduit. Un principe de la présente invention est de réduire au minium, voire d'éliminer, les forces de frottements au niveau de la pompe.

Il est à noter que contrairement aux dispositifs de distribution de l'art antérieur précités, l'orifice de distribution est fixe par rapport à un réservoir sur lequel la pompe est montée. On obtient ainsi un jet de produit fluide continu et parfaitement localisé.

L'invention sera plus amplement décrite en référence aux dessins joints donnant à titre d'exemple non limitatif un mode de réalisation de la présente invention.

Sur les dessins :
- la figure 1 est une vue en section transversale à travers un dispositif de distribution selon l'invention monté sur le col d'un récipient,
- la figure 2 est une vue éclatée du dispositif de distribution de la figure 1 monté sur un col de récipient,
- la figure 3A est une vue en section transversale à travers un clapet de sortie selon une première forme de réalisation,
- la figure 3B est une vue en section transversale à travers un clapet de sortie selon une seconde forme de réalisation, et
- la figure 4 est une vue similaire à celle de la figure 3 pour une troisième forme de réalisation d'un clapet de sortie.

La présente invention sera expliquée en référence à un distributeur à cadence rapide. Cependant, il doit être compris que le clapet de sortie selon l'invention peut être mis en oeuvre sur un autre type de distributeur manuel ou mécanique. Toutefois, la mise en oeuvre dans un distributeur à cadence rapide offre les avantages décrits ci-dessus.

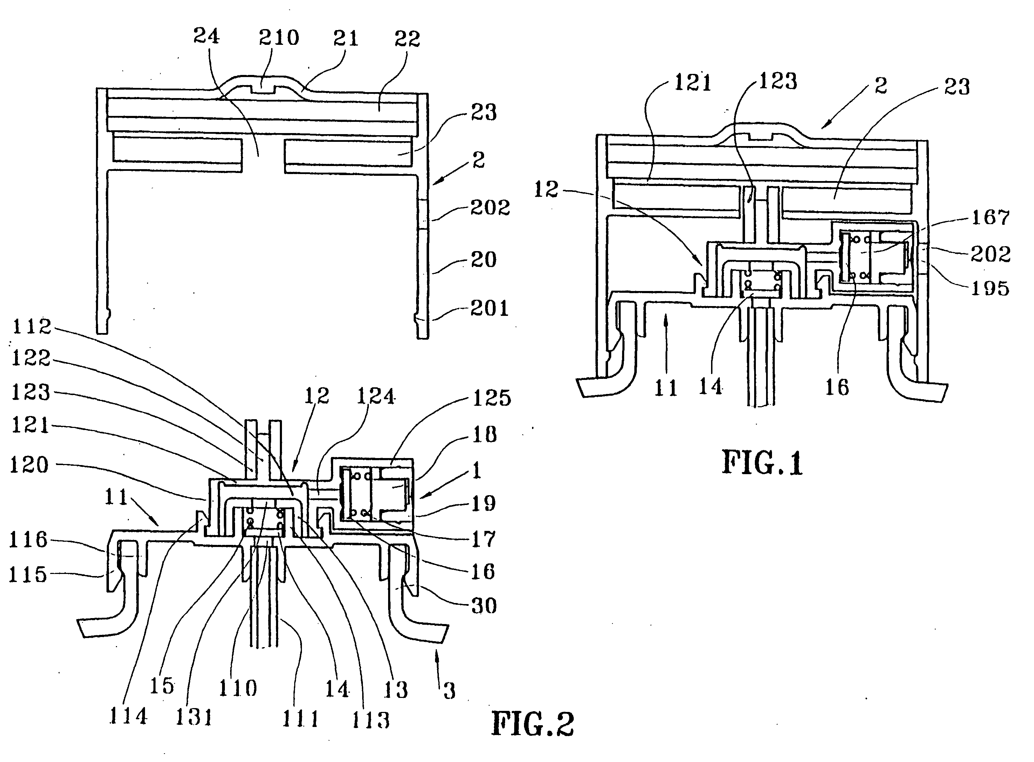

On se réfèrera tout d'abord à la figure 2 qui est une vue éclatée qui montre plus clairement la totalité des éléments constitutifs du dispositif de distribution selon l'invention.

Il peut être décomposé en deux sous-ensembles 1 et 2, dont le premier 1 comprend une pompe et le second sous-ensemble 2 comprend des moyens d'actionnement. Selon l'invention, le second sous-ensemble 2 est relié au premier sous-ensemble 1 de manière amovible, par exemple par encliquetable comme on le verra ci-après.

Le premier sous-ensemble 1 est fixé sur le col 30 d'un récipient qui n'est que partiellement représenté sur les figures 1 et 2. Cette fixation peut être réalisée par encliquetage comme représenté sur les figures, mais d'autres techniques telles que le vissage ou le sertissage sont également possibles. Plus précisément, le premier sous-ensemble comprend un corps 11 et une pièce rapportée 12 sur le corps 11. Les moyens d'encliquetage sur le col 30 du récipient 3 consiste en une jupe périphérique 115 à l'extrémité de laquelle est formé un cordon d'encliquetage qui fait saillie vers l'intérieur de manière à venir se loger sous le rebord épaissi du col 30. L'étanchéité sur le col 30 du récipient peut être réalisée au moyen d'une lèvre auto-jointante 116 qui se présente sous la forme d'une bride qui vient en contact étanche avec le bord interne du col 30. Le corps 11 définit également une ouverture d'entrée 110 autour de laquelle peut s'étendre un manchon de raccordement pour un tube plongeur 111. Autour de l'ouverture d'entrée 110, s'étend une douille 113 qui définit partiellement une chambre de clapet d'entrée. Pour compléter cette chambre de clapet d'entrée, la douille 113 est coiffée d'un godet 13 percée d'un trou 131. A l'intérieur de la chambre ainsi formée par la douille 113 et le godet 13 est logé un organe de clapet d'entrée131 sous la forme d'une rondelle sollicitée élastiquement par un ressort 15 sur l'ouverture d'entrée 110 pour l'obturer de manière étanche. Le corps 11 définit également un rebord d'encliquetage 114 qui coopère avec la pièce rapportée. La liaison entre la pièce rapportée 12 et le corps 11 est étanche au niveau de leur encliquetage, et ils définissent ainsi ensemble une chambre de pompe 112 qui communique avec le récipient 3 par l'intermédiaire du tube plongeur 111 et de l'ouverture d'entrée 110 lorsque le clapet 131 est ouvert. La pièce rapportée 12 s'étend autour du godet 13 avec une paroi périphérique 120 dont l'extrémité inférieure forme un profil d'encliquetage coopérant avec le rebord d'encliquetage 114 du corps 11. Cette paroi périphérique 120 peut se présenter sous forme cylindrique et son extrémité supérieure est fermée par une paroi, qui selon l'invention, se présente sous la forme d'une membrane souple déformable 121. La paroi périphérique 120 et la membrane souple 121 forment ensemble avec le corps 11 une chambre de pompe 112. Cette chambre 112 est obturée à l'entrée 110 par l'organe de clapet mobile bas 14. La chambre 112 présente également une sortie 124 qui est obturée par un organe de clapet mobile 16 sollicité élastiquement par un ressort 16 sur un siège 126. Le conduit de sortie 124 ainsi que lé siège 126 sont formés par la pièce rapportée 12. La pièce rapportée 12 forment également un logement 125 dans lequel est logé l'organe de clapet mobile 16, le ressort 17, mais également un noyau de gicleur 18 ainsi qu'un gicleur 19. Dans la forme de réalisation représentée sur les figures 1, 2 et 3, il s'agit d'un gicleur à orifice de sortie unique 195 qui forme ensemble avec le noyau 18 des canaux de tourbillonnement 192 ainsi qu'une chambre de tourbillonnement 194. Le noyau 18 forme avec l'organe de clapet mobile 16 ainsi qu'avec les parois latérales du logement 125, une chambre de clapet de sortie 167 dans laquelle du produit fluide est stocké. Il est à noter que l'orifice de distribution 195 ainsi que le logement 125 sont fixes par rapport au récipient contrairement à la tête de distribution du document de l'art antérieur précité. En effet, le seul organe mobile de la pièce 12 est la membrane souple déformable 121. Pour l'actionnement de cette membrane 121, il est prévu un appendice d'actionnement 122 qui est avantageusement formé de manière monobloc avec la pièce 12. Dans la forme de réalisation représentée sur les figures, l'appendice 122 comprend un plongeur 123 destiné à coopérer avec un solénoïde 23 qui fait partie du second sous-ensemble 2.

En effet, le second sous-ensemble 2 se présente sous la forme d'un capuchon comprenant un corps 20 dans lequel est logé le solénoïde 23, l'électronique nécessaire au fonctionnement du solénoïde 23 ainsi qu'une batterie sous la forme d'une pile changeable. A son extrémité supérieure, le second sous-ensemble 2 forme un poussoir 21 pour établir le contact électrique et ainsi activer le solénoïde 23. Comme tout solénoïde, le solénoïde 23 comprend un logement central 24 dans lequel le plongeur 123 du premier sous-ensemble 1 peut se déplacer en va-et-vient lorsque le solénoïde 23 est alimenté. Ainsi, la membrane souple déformable 21 peut être déformée rapidement et répétitive ment à mesure que le plongeur 23 se déplace en va-et-vient dans le solénoïde 23. Selon l'invention, le second sous-ensemble 2 est monté sur le premier sous-ensemble 1 par encliquetage ; à cet effet, le corps 20 forme à proximité de son extrémité inférieure des saillies d'encliquetage 211 destinée à coopérer avec la jupe extérieure 115 que forme le corps 11 du premier sous-ensemble 1, comme on peut le voir sur la figure 1. De préférence, le second sous-ensemble 2 est encliqueté de manière amovible sur le premier sous-ensemble 1 de sorte qu'il peut en être retiré ce qui permet sa réutilisation. En effet, le second sous-ensemble 2 comprend une électronique relativement coûteuse alors que le premier sous-ensemble 1 est essentiellement constitué de pièces de matière plastique moulée, donc d'un prix de revient relativement bas. Par conséquent, une fois que le récipient 3 est vide, celui-ci peut être jeté avec le premier sous-ensemble 1 monté dessus alors que l'on préserve le second sous-ensemble 2.

Bien qu'un solénoïde et un plongeur associé aient été utilisés pour illustrer la présente invention, on peut imaginer d'autres moyens d'actionnement, par exemple, purement mécaniques avec un moteur.

Le fonctionnement d'un tel dispositif de distribution est particulièrement simple. En appuyant sur le poussoir 21, le contact électrique est établi et le solénoïde 23 est alimenté. Ceci a pour effet d'actionner le plongeur 123 qui est relié à l'appendice 122, de sorte que la membrane 121 est rapidement déformée. Lors de la montée du plongeur 123, le clapet bas 14 s'ouvre et le clapet haut 16 se ferme alors que pendant la descente du plongeur 123, le clapet bas 14 se ferme et le clapet haut 16 s'ouvre. Etant donné qu'il n'y a aucune force de frottement dans une telle pompe, la puissance du solénoïde 23 peut être extrêmement réduite, ainsi que son alimentation (pile), de sorte que le second sous-ensemble 2 peut présenter des dimensions particulièrement réduites.

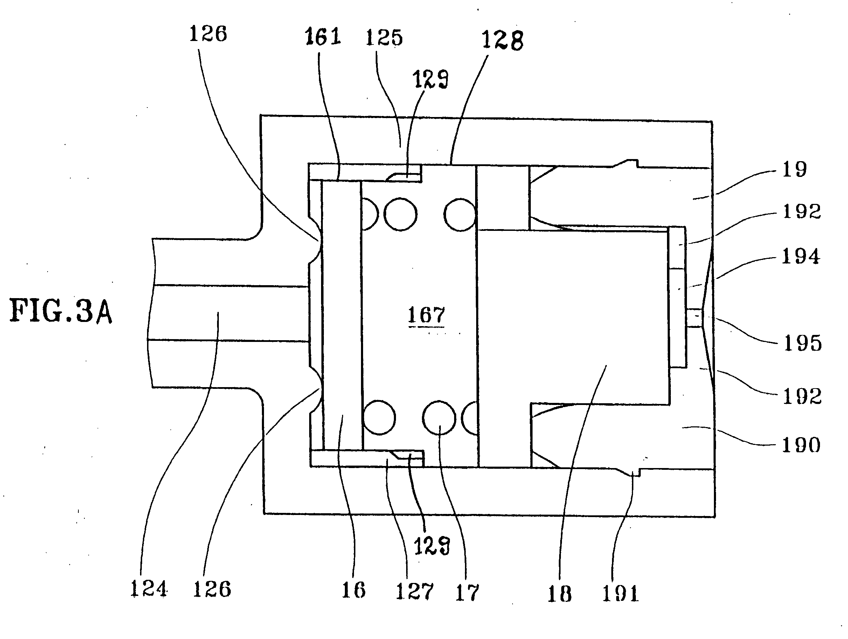

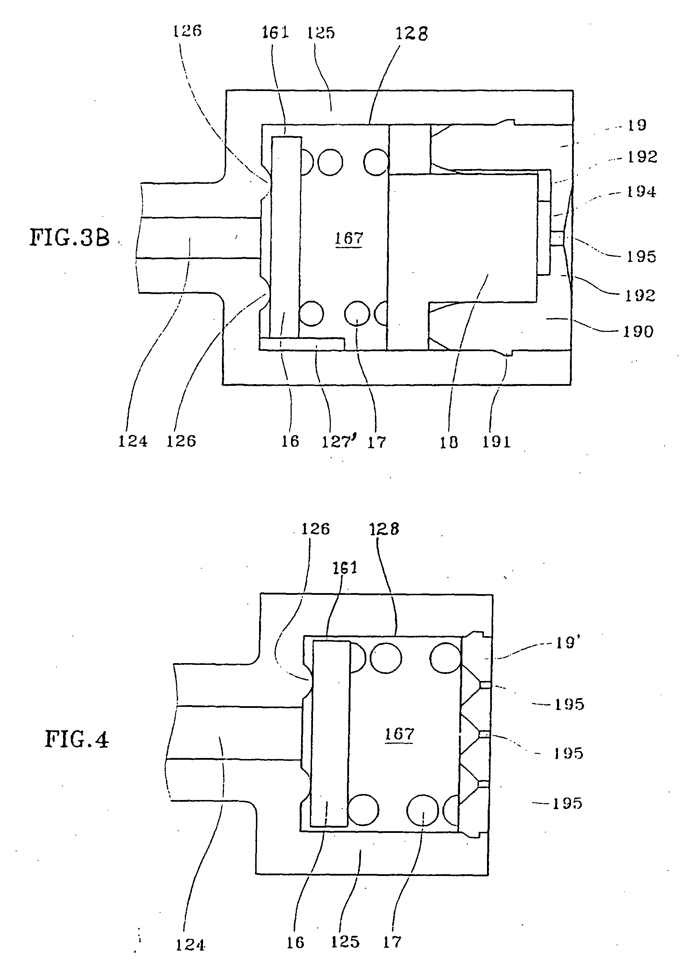

On se référera maintenant aux figures 3A, 3B et 4 pour expliquer la structure et le fonctionnement du clapet de sortie 16 du dispositif selon l'invention. Il est à noter que ce clapet de sortie peut être utilisé dans d'autres types de pompe, pas seulement à cadence rapide, bien qu'il trouve une application privilégiée avec ce type de pompe.

Selon l'invention, l'organe de clapet mobile 16, en plus de sa fonction d'obturation sélective du canal de sortie 124, remplit aussi une fonction additionnelle de moyens de piston pour refouler le produit fluide stocké dans la chambre de clapet 167 vers l'orifice de sortie 195. Après la première utilisation, la chambre de clapet 167 est remplie de produit fluide. En alimentant le solénoïde par pression sur le poussoir 21, la membrane 121 est déformée ce qui a pour effet de refouler du produit fluide à travers le conduit de sortie 124. Le produit fluide sous pression arrive contre l'organe de clapet mobile et le décolle de son siège 126. L'organe de clapet mobile effectue pour cela un déplacement translatif en direction de l'orifice de distribution 195. Au cours de ce déplacement translatif, l'organe de piston mobile 16 déplace le produit fluide stocké dans la chambre 167. Par conséquent, la produit fluide qui arrive sous pression dans le canal de sortie 124 n'est pas celui qui est distribué au niveau de l'orifice de sortie 195 mais celui qui est temporairement stocké dans la chambre de clapet 167. Lorsque l'organe de clapet mobile 16 regagne sa position de contact étanche sur le siège 126, le produit fluide présent entre lui et le siège 126 est refoulé dans la chambre de clapet haut 167 du fait que l'organe de clapet mobile est sollicité par le ressort 17. A la prochaine arrivée de produit fluide sous pression dans le canal de sortie 124, le même processus se répète : le produit fluide pousse l'organe de clapet mobile qui pousse lui-même le produit stocké dans la chambre 167 vers l'orifice 195. Lorsqu'il regagne son siège, le produit fluide situé en amont passe dans la chambre 167.

Cette fonction de moyen de piston que remplit l'organe de clapet mobile 16 est possible en raison de sa configuration à l'intérieur de la chambre 167. En effet, la chambre 167 définit une paroi interne cylindrique 128, et l'organe de clapet mobile 16 se présente sous la forme d'un disque dont le diamètre n'est que très légèrement inférieur à celui du logement 125 de sorte que l'écart entre le bord périphérique 161 du disque 16 et la paroi 128 de la chambre 167 est très réduit. Le disque 16 se déplace donc à l'intérieur de la chambre 167 avec un écart très réduit, de sorte que le produit sous pression rencontre une résistance à l'écoulement à ce niveau. Ceci est représenté sur la figure 4.

On peut également envisager une forme de réalisation dans laquelle la rondelle 16 vient en contact étanche de coulissement contre la paroi interne de la chambre sur une partie de sa course où le contact serait par exemple interrompu par des saillies 129 réalisées dans la paroi interne du logement 125. Dans cette solution, le piston 16 remplit alors littéralement la fonction d'un piston. Ceci est représenté sur la figure 3A où l'on voit que le bord périphérique 161 du disque 16 vient en contact étanche dans un manchon 127 qui présente au niveau de son extrémité aval des saignées 129 par lesquelles le produit fluide peut s'écouler en fin de course du disque.

En variante, les saillies peuvent s'étendre sur la totalité de la longueur du manchon de manière à définir des nervures et des saignées même lorsque le disque est en appui étanche contre son siège 126. Les nervures formées par le manchon 127 servent alors de moyens de guidage pour assurer un déplacement translatif du disque dans la chambre.

On peut aussi envisager une autre version, représentée sur la figure 3B, dans laquelle le bord périphérique 161 du disque 16 est en contact avec des nervures 127' réparties circonférentiellement sur la paroi 128 de la chambre. Entre les nervures, le bord 161 du disque présente un écart très réduit avec la paroi 128 de la chambre 167. On peut par exemple prévoir trois nervures au plus qui servent avantageusement de moyens de guidage comme les nervures du manchon 127 de la figure 3A.

Sur les figures 3A et 3B, il y a un orifice de distribution unique 195 en amont duquel sont formés des canaux de tourbillonnement 192 ainsi qu'une chambre de tourbillonnement 194. Ainsi, le jet de produit fluide distribué à la sortie de l'orifice 95 est un jet de produit continu pulvérisé.

Dans la forme de réalisation représentée sur la figure 4, le gicleur est formé par une plaque de gicleur 19' dans laquelle sont percés plusieurs orifices de distribution 195. La distribution du produit fluide est alors plus étendue.

## Revendications

1. Dispositif de distribution comprenant une pompe à produit fluide (1) définissant :
- une chambre de pompe (112) de volume variable,
- un clapet d'entrée (14) permettant au produit fluide de rentrer dans la chambre de pompe,
- un clapet de sortie (16) permettant au produit fluide sous pression de sortir de la chambre,
- un orifice de distribution (195) en aval du clapet de sortie, et
- le clapet de sortie comprenant un siège de clapet (126) et un organe de clapet mobile (16) sollicité élastiquement sur ledit siège,
**caractérisé en ce que** :
- l'organe de clapet mobile 16 forme des moyens de piston pour refouler le produit fluide situé en aval vers l'orifice de distribution, l'organe de clapet mobile 16 étant logé dans une chambre de clapet (167) dans laquelle il se déplace avec un écart réduit, et **en ce que**,
- des moyens d'actionnement à cadence rapide (2) sont prévue pour faire varier rapidement et répétitivement le volume de la chambre de pompe de manière à déplacer l'organe de clapet mobile pour créer, à la sortie de l'orifice de distribution, un jet de produit fluide sensiblement continu.

2. Dispositif selon là revendication 1, dans lequel la chambre de clapet définit une paroi interne cylindrique (128) et l'organe de clapet mobile comprend un disque cylindrique (16) présentant un diamètre légèrement inférieur à celui de la chambre de clapet de sorte que le bord périphérique (161) du disque se déplace avec un écart très réduit par rapport à la paroi cylindrique (128).

3. Dispositif selon la revendication 1, dans lequel la chambre de clapet définit une paroi interne cylindrique (128) pourvue de nervures (127') et l'organe de clapet mobile comprend un disque cylindrique (16) présentant un bord périphérique (161) en contact de glissement avec les nervures (127').

4. Dispositif selon la revendication 1, dans lequel l'organe de clapet mobile (16) est en contact de glissement étanche dans la chambre (167) hormis au niveau de saignées (129) permettant un passage du produit fluide vers l'orifice de distribution en fin de course de l'organe de clapet mobile en éloignement de son siège (126).

5. Dispositif selon la revendication 4, dans lequel l'organe de clapet mobile est en contact de glissement dans un manchon (127) situé dans la chambre (167).

6. Dispositif selon la revendication 5, dans lequel le manchon définit les saignées (129).

7. Dispositif selon l'une quelconque des revendications précédentes, dans lequel la chambre de pompe comprend une paroi sous la forme d'une membrane souple déformable (121) sur laquelle agissent les moyens d'actionnement.

8. Dispositif selon l'une quelconque des revendications précédentes, dans lequel la chambre de pompe (112), les clapets d'entrée (14) et de sortie (16), et l'orifice de distribution (195) font partie d'un premier sous-ensemble (1) comportant des moyens de fixation (115) sur un récipient (3).

9. Dispositif selon l'une quelconque des revendications précédentes, dans lequel l'orifice de distribution est fixe par rapport à un réservoir sur lequel la pompe est montée.

10. Dispositif selon la revendication 6, dans lequel le premier sous-ensemble (1) comprend un corps (11) et une pièce (12) reliée audit corps pour former ensemble ladite chambre de pompe (112), la pièce (12) formant la membrane (121).

11. Dispositif selon la revendication 9, dans lequel ladite pièce (12) reçoit le clapet de sortie (16) et l'orifice de distribution (195).

## Patentansprüche

1. Abgabevorrichtung, die eine Pumpe (1) für ein fluidförmiges Produkt umfasst, welche folgende Bestandteile aufweist:
- eine Pumpenkammer (112) mit veränderlichem Volumen,
- ein Eintrittsventil (14), das es dem fluidförmigen Produkt ermöglicht, in die Pumpenkammer einzutreten,
- ein Austrittsventil (16), das es dem unter Druck stehenden fluidförmigen Produkt ermöglicht, aus der Kammer auszutreten,
- eine Abgabeöffnung (195) stromabwärts vom Austrittsventil, wobei
- das Austrittsventil einen Ventilsitz (126) und ein bewegliches Ventilelement (16) umfasst, das in elastischer Weise zu diesem Sitz hin vorgespannt ist,
**dadurch gekennzeichnet, daß**
- das bewegliche Ventilelement (16) Kolbeneinrichtungen zum Verdrängen des fluidförmigen Produktes umfasst, das sich stromabwärts von der Abgabeöffnung befindet, wobei das bewegliche Ventilelement (16) in einer Ventilkammer (167) untergebracht ist, in der es sich mit einem sehr geringen Spiel bewegt, und daß,
- Einrichtungen (2) zu einer Betätigung in schneller Folge vorgesehen sind, um auf schnelle und sich wiederholende Weise das Volumen der Pumpenkammer derart zu verändern, daß das bewegliche Ventilelement verschoben wird, um am Ausgang der Abgabeöffnung einen im wesentlichen kontinuierlichen Strahl des fluidförmigen Produktes zu erzeugen.

2. Vorrichtung nach Anspruch 1, bei der die Ventilkammer eine zylindrische Innenwand (128) definiert und das bewegliche Ventilelement eine Zylinderscheibe (16) umfasst, die einen Durchmesser aufweist, der geringfügig kleiner als der der Ventilkammer ist, so daß der Umfangsrand (161) der Scheibe sich mit einem sehr geringen Spiel bezüglich der Zylinderwand (128) bewegt.

3. Vorrichtung nach Anspruch 1, bei der die Ventilkammer eine zylindrische Innenwand (128) umschließt, die mit Rippen (127') versehen ist, und bei der das bewegliche Ventilelement eine Zylinderscheibe (16) aufweist, die einen Umfangsrand (161) besitzt, der in Gleitkontakt mit den Rippen (127') steht.

4. Vorrichtung nach Anspruch 1, bei der das bewegliche Ventilelement (16) in dichtem Gleitkontakt in der Kammer (167) außer im Bereich von Ausnehmungen (129) steht, die am Ende des Bewegungshubs des beweglichen Ventilelements bei seiner Wegbewegung von seinem Sitz (126) ein Hindurchtreten des fluidförmigen Produktes zur Abgabeöffnung ermöglichen.

5. Vorrichtung nach Anspruch 4, bei der das bewegliche Ventilelement sich in einer Buchse (127) in Gleitberührung befindet, die in der Kammer (167) angeordnet ist.

6. Vorrichtung nach Anspruch 5, bei der die Buchse die Ausnehmungen (129) definiert.

7. Vorrichtung nach einem der vorhergehenden Ansprüche, bei der die Pumpenkammer eine Wand in der Form einer verformbaren, nachgiebigen Membran (121) umfasst, auf welche die Betätigungseinrichtungen einwirken.

8. Vorrichtung nach einem der vorhergehenden Ansprüche, bei der die Pumpenkammer (112), das Eintrittsventil (14) und das Austrittsventil (16) sowie die Abgabeöffnung (195) Teile einer ersten Unter-Einheit (1) bilden, die Befestigungsmittel (115) zur Befestigung auf einem Behälter (3) aufweist.

9. Vorrichtung nach einem der vorhergehenden Ansprüche, bei der die Abgabeöffnung bezüglich eines Behälters befestigt ist, auf dem die Pumpe montiert ist.

10. Vorrichtung nach Anspruch 6, bei der die erste Unter-Einheit (1) einen Körper (11) und ein Element (12) umfasst, das mit dem Körper verbunden ist, um gemeinsam die Pumpenkammer (112) zu bilden, wobei das Element (12) die Membran (121) bildet.

11. Vorrichtung nach Anspruch 9, bei der das besagte Element (12) das Ausgangsventil (16) und die Abgabeöffnung (195) aufnimmt.

## Claims

1. A dispenser device comprising a fluid pump (1) defining:
a pump chamber (112) of variable volume;
an inlet valve (14) making it possible for the fluid to enter into the pump chamber;
an outlet valve (16) making it possible for the fluid under pressure to exit from the chamber;
a dispensing orifice (195) downstream from the outlet valve; and
the outlet valve comprising a valve seat (126) and a moving valve member (16) urged resiliently against said seat;
said dispenser device being **characterized:**
**in that** the moving valve member 16 forms piston means for delivering the fluid situated downstream towards the dispensing orifice, the moving valve member 16 being received in a valve chamber (167) in which it moves with a small amount of clearance; and
**in that** fast rate actuating means (2) are provided to cause the volume of the pump chamber to vary rapidly and repetitively so as to displace the moving valve member in order to generate, at the dispensing orifice, a substantially continuous jet of fluid.

2. A device according to claim 1, in which the valve chamber defines a cylindrical inside wall (128) and the moving valve member comprises a cylindrical disk (16) of diameter slightly smaller than the diameter of the valve chamber so that the peripheral edge (161) of the disk moves with a very small amount of clearance relative to the cylindrical wall (128).

3. A device according to claim 1, in which the valve chamber defines a cylindrical inside wall (128) provided with ribs (127') and the moving valve member comprises a cylindrical disk (16) having a peripheral edge (161) in sliding contact with the ribs (127').

4. A device according to claim 1, in which the moving valve member (16) is in leaktight sliding contact in the chamber (167) except at grooves (129) enabling the fluid to pass towards the dispensing orifice when the mobile valve member is at the end of its stroke going away from its seat (126).

5. A device according to claim 4, in which the moving valve member is in sliding contact in a sleeve (127) situated in the chamber (167).

6. A device according to claim 5, in which the sleeve defines the grooves (129).

7. A device according to any preceding claim, in which the pump chamber includes a wall in the form of a deformable flexible membrane (121) on which the actuating means act.

8. A device according to any preceding claim, in which the pump chamber (112), the inlet valve (14), the outlet valve (16), and the dispensing orifice (195) are part of a first subassembly (1) provided with fixing means (115) for fixing to a receptacle (3).

9. A device according to any preceding claim, in which the dispensing orifice is fixed relative to a reservoir on which the pump is mounted.

10. A device according to claim 6, in which the first subassembly (1) comprises a body (11) and a piece (12) connected to said body to form said pump chamber (112) together, the piece (12) forming the membrane (121).

11. A device according to claim 9, in which said piece (12) receives the outlet valve (16) and the dispensing orifice (195).
